# EUROPEAN PATENT SPECIFICATION

(11) **EP 2 095 932 B1**
(45) Date of publication and mention of the grant of the patent: **12.12.2012**
(21) Application number: 07828298.5
(22) Date of filing: 21.09.2007
(51) Int. Cl.: B29D 30/32

(54) **METHOD AND APPARATUS FOR PRODUCING GREEN TIRES**
VERFAHREN UND VORRICHTUNG ZUR HERSTELLUNG VON REIFENROHLINGEN
PROCÉDÉ ET APPAREIL POUR LA FABRICATION DE PNEUS CRUS

(30) Priority: 20.11.2006 JP 2006312972; 28.12.2006 JP 2006356199
(43) Date of publication of application: 02.09.2009
(73) Proprietor: Bridgestone Corporation, Tokyo 104-8340 (JP)
(72) Inventor: OGAWA, Yuichiro, Kodaira-shi Tokyo 187-8531 (JP)
(74) Representative: Waldren, Robin Michael
(86) International application number: PCT/JP2007/068378
(87) International publication number: WO 2008/062601

(56) References cited:
- EP-A1- 1 645 403
- WO-A1-2006/134969
- JP-A- 2000 225 653
- JP-A- 2001 246 675
- JP-A- 2005 186 455
- JP-A- 2005 335 081

## Description

### TECHNICAL FIELD

The present invention relates to a method of producing a green tire by disposing required tire component members, in a given order, on a rigid core having an outer contour which corresponds to an inner contour of a product tire, a device for turning a carcass band use for producing the green tire and apparatus for producing a green tire. In particular, the present invention proposes a technique of wrapping a end portion of a carcass band composed of a unit carcass ply member around a bead ring with a steel cord being subjected to a plastic deformation to improve significantly a pullout resistance of a carcass ply composed of steel cords relative to a bead ring such as one having a polygonal shaped cross section in a product tire.

### RELATED ART

When a green tire is built on a rigid core having a out contour corresponding to an inner contour of a product tire, it is proposed, for example, in JP 2006-62495 A and Japanese Patent Application No. 2006-56078, in order to improve a pullout resistance of a carcass ply of a product tire and thus enhance a durability of a bead portion, that each of end portions of a carcass band composed of steel cords is turned up from the inner side to the outer side and then from the outer side to the inner side around respective one of a pair of bead rings and the turn-up end of the carcass band is anchored to the bead ring radially outward by a anchoring member. Attention is also drawn to the disclosure of JP2005-335081.

### DISCLOSURE OF THE INVENTION

In these proposed technique, however, the steel cords in the carcass band are elastically reformed to be anchored to the bead ring, so that the anchoring member tends to be pushed out outward of the bead ring due to the elastic restoring force of the steel cords and that the carcass band itself tends to restore to the original shape prior to vulcanizing a green tire. So, there is a problem that a position of the anchoring member and the shape of the carcass band cannot be sufficiently stable. This is especially serious if rubber is softened in the early stage of the vulcanization of a green tire to lower the anchoring force of the rubber against the displacement of the anchoring member and the reformation of the carcass band.

The present invention aims to solve these drawbacks which the proposed techniques involves and its objective is to provide a method of producing a green tire capable of securely wrapping and holding the turn-up end of the carcass band around the bead ring in a desired manner without a need for anchoring it to the bead core with another member such as the above-mentioned anchoring member, a device for turning a carcass band used for the production of same and apparatus for producing a green tire.

The present invention provides a method of producing a green tire according to claim 1, the green tire being built by providing required tire component members on a rigid core which has an outer contour corresponding to an inner contour of a product tire and which can be disassembled and assembled in a given order, the method comprising:
arranging a plurality of carcass ply members, which are composed of a steel cord typically coated with a rubber and one or more of which are used as a unit, on the rigid core over its entire circumference, for example, in a cylindrical shape to form a carcass band,
arranging one or more pairs of bead rings having a given diameter at both side portions of the rigid core outward from the carcass band,
reforming each end portion of the carcass band projecting from the bead ring in a direction turning in radially outer side at one or more positions in a plastic manner over the entire circumference of the carcass band,
wrapping the reformed portion of the carcass band around the bead ring with being subjected to a further plastic deformation, wherein the reformation of the projection end portion of the carcass band is carried out by pressing locally the projection end portion into one or more circumference annular grooves on a circumference face of an anvil ring which is arranged on the side portions of the rigid core to be rotationally driven.

The reformation of the each projection end portion projecting from the bead ring in the lateral direction is preferably carried out at a position radially inside of the bead ring.

The above-mentioned reformation is preferably carried out on the anvil ring which has smaller diameter than that of the rigid core, and, more preferably, on a conical anvil ring having a diameter gradually decreasing toward the outside in the axial direction.

It is noted that in any of these cases using an anvil ring, the reformation is preferably carried out on the anvil ring rotationally driven at the same velocity as that of the rigid core. The reformation is embodied by pressing the carcass band into the annular groove of the anvil ring with a rotation disk, especially one having a thin peripheral portion.

When the projection end portion of the carcass band is reformed at points spaced in the central axis direction, it is preferred that a plurality of rotating disks are simultaneously act upon the annular grooves of the anvil ring to simultaneously reform plural points.

The device for turning a carcass band used for producing a green tire according to the present invention as defined in claim 8, comprises: an anvil ring on which one or more annular grooves are provided, which anvil ring is arranged adjacent to side portions of a rigid core having an outer contour corresponding to an inner contour of a product tire, and which has a smaller diameter than that of the rigid core and is fixed on a rotational driving shaft of the rigid core; and a rotation disk which presses locally the end portions of the carcass band into the annular grooves of the anvil ring and is arranged to be able to approach to and recede from the anvil ring.

In this device, the rotation disk is preferably mounted on a supporting shaft extending in parallel to the circumference of the anvil ring rotatably or rotationally drivable with the supporting shaft in the radial cross section of the anvil ring. The anvil ring is preferably provided with a restraining means, such as a suction means or the like, for positioning and holding the above-mentioned projection end portions of the carcass band on the circumference.

In any of the above-mentioned turning devices, the circumference of the anvil ring is preferably formed as a tapered face having a diameter progressively decreasing with distance from the rigid core. In addition, when multiple places of the projection end portions of the carcass band need to be reformed under an action of the plural annular grooves of the anvil ring, each of the rotation disks for pressing the carcass band into respective one of the plural annular grooves of the anvil ring is preferably mounted on a common supporting shaft which can approach to and recede from the circumference of the anvil ring with maintaining a posture parallel to the circumference in the radial section of the anvil ring. Preferred embodiments of the invention are defined in the dependent claims.

With any of the above-mentioned methods, the reformed portions of the carcass band after the reformation are wrapped around the bead ring and are place to correspond to one or more angle portions of the bead ring, so that a hooking force of the carcass ply in a product tire to the bead ring can be further enhanced to remarkably improve the pullout resistance of the carcass ply.

It is noted that when the pair of the bead rings are displaced to their setting position adjacent to the respective side portions of the rigid core prior to the wrapping of the reformed portion around the bead ring, the wrapping posture of the reformed portion around the bead ring can be substantially equal to the wrapping posture of the reformation portion in the product tire. Therefore, as compared to a case that the reformed portions are wrapped around the bead rings and then the bead rings are displaced to the setting position, the likelihood of a change in the wrapping posture can be effectively eliminated to provide the carcass ply of the product tire with a high and desired pullout resistance. In addition, unintended fractures of a path line of the carcass ply used as a bone structure of the product tire, and consequently a size and a shape of the product tire, can be effectively prevented.

In this regard, when the wrapping of the reformed portions around the bead ring is achieved by reforming the carcass band from the outer side in the axial direction of the rigid core to a direction where the carcass band carries and holds the bead ring, as compared to a case that the carcass band is reformed from the inner side in the axial direction of the rigid core to the direction where the carcass band carries and holds the bead ring, the reformation can be easy and the accuracy of wrapping the reformed portion around the bead ring can be sufficiently high.

When the wrapping is embodied, in a state that the carcass band and the bead ring are positioned and held by a bead-lock means, by radially expanding a wrapping means disposed adjacent outside of the bead-lock means in relative to the rigid core to reform the above-mentioned reformation parts outwardly in the radial direction in a plastic manner, a desired plastic deformation can be easily embodied with a simple device under an action of the bead-locking means.

Moreover, the device for turning a carcass band according to the present invention may comprise an anvil ring which has an annular groove on the circumference and is disposed at the both end portions of the rigid core to preferably be rotated integrally therewith, and a rotation disk arranged to be able to approach to and recede from the anvil ring. In such a device, the end portions of the carcass band arranged on the entire circumference of the rigid core are placed onto the anvil ring, and the rotation disk is displaced to approach to the circumference of the anvil ring while the carcass band is integrally rotationally moved with the rigid core and the anvil ring which preferably rotate at the mutually same angular rate. Then, the rotation disk presses the end portion of the rotating carcass band on the anvil ring locally into the annular groove of the anvil ring to cause a desired plastic deformation at the end portion over the entire circumference. As a result, the reformation can be smoothly implemented at one or more positions on the carcass band as desired.

In this context, when the rotation disk is mounted on the supporting shaft extending in parallel to the circumference in the radial cross section of the anvil ring, the reformation of the end portions of the carcass band caused by pressing it into the annular groove with the rotation disk can be more smooth and accurate.

In addition, when the anvil ring is provided with a means for restraining the end portion of the carcass band such as a magnetic adsorption means for a steel cord, a vacuum adsorption means for a carcass band often coated with a coating rubber, and an adhesive holding means for a carcass band, the end portion can be advantageously anchored and prevent the end portion from an escape reformation on the anvil ring upon conducting the reformation, thereby securing the reformation appropriately and precisely.

If the circumference of the anvil ring is formed as a tapered face having a diameter progressively decreasing with distance from the rigid core, as mentioned in the above, the circumference of the anvil ring can be more appropriately adopted to the extending shape of the projecting end portions of the carcass band engaged with the bead rings, so that the projecting end portions can be reformed with a higher accuracy.

In any of the above-mentioned devices, when the multiple rotating disks, which press the carcass band into the respective annular grooves of the anvil ring, are mounted on one common supporting shaft, simultaneous reformations of the projecting end portion at multiple positions can be easily implemented by displacing the supporting shaft to approach to the anvil ring.

Furthermore, in the apparatus for producing a green tire according to the present invention, for example, the end portions of the unit carcass ply members are clamped by the clamper. Under an action of the tensile force on the end portions, the carcass ply members are attached onto the rigid core and the end portions of the carcass ply members are reformed in a direction turning in radially outward of the bead core at one or more positions by a tightening force from a mechanical or manual operation of the clamper. The end portions of the carcass ply members are positioned and displaced onto the circumference of the positioning rings. This process is repeated over the entire circumference of the rigid core which rotationally indexing the rigid core and the positioning rings at a given angle range. As a result, a carcass band having deformed portion at both end portions and composed plenty of carcass ply members is formed. Then, at least one pair of bead rings are positioned and disposed at the both end portions of the rigid core and radially outside of the end portion of the carcass band. Thereafter, in a condition that the pair of bead rings on the carcass band have been displaced to respective given setting positions adjacent to the side portions of the bead core with the carcass band being deformed, the bead locking-means are radially expanded to position and hold the carcass band, and the carcass band-wrapping means is radially expanded to deform the reformed portion of the carcass band around the bead ring radially outwardly in a plastic manner. The reformed portion is thus wrapped around and anchored to the bead ring from the outer side in the axial direction of the bead core to a direction where the carcass band carries the bead ring. In this manner, the above-mentioned another invention of the production method can be always appropriately and securely realized with a simple configuration.

Meanwhile, in such apparatus, if the positioning ring is provided with a means for restraining the carcass band onto the circumference such as a magnetic adsorption means for a steel cord typically coated wit a rubber, and consequently a magnetic adsorption means for a steel cord or an adhesive holding means for a carcass, the end portions of the carcass band can be prevented from being displaced on the positioning ring to secure an engagement of the bead rings as desired and to sufficiently eliminate the likelihood of an unexpected torsion of the carcass ply members.

If the circumference of the positioning ring is formed as a tapered face having a diameter progressively decreasing with distance from the rigid core, the carcass ply member and consequently the carcass band can be positioned in a shape that is closer to the final shape of the carcass band applied on the rigid core, and the likelihood of an interference between the clamper or the like and the positioning ring can be more advantageously eliminated the circumference of the anvil ring can be more appropriately adapted to the extending shape of the projecting end portions of the carcass band engaged with the bead rings, so that the projecting end portions can be reformed with a higher accuracy. As a result, the accuracy of the attachment of the carcass ply member onto the rigid core, on one hand, can be improved, while the degree of freedom in design of the reformation means such as a clamper, on the other hand, can be increased.

### BRIEF DESCRIPTION OF THE DRAWINGS

Fig. 1 is a partial sectional view of one embodiment of a device for turning a carcass band according to the present invention taken in the radial direction.
Fig. 2 is an enlarged view of a main part one side of an anvil ring during a reform process.
Fig. 3 is a view similar to Fig. 1 showing a process of reforming projecting end portions of the carcass band and a process of setting bead rings.
Fig. 4 is a view similar to Fig. 1 showing a process of wrapping the reformed
portion around the bead core.
Fig. 5 is a partial sectional view of one embodiment of apparatus for producing a tire which is useful for understanding the present invention, taken in the radial direction.
Fig. 6 is an enlarged view of a main part of one side of a clamper during the reform process.
Fin. 7 is an enlarged explanation drawing showing one positioning ring by way of example.
Fig. 8 is a view showing a process of engaging the bead rings with the end portions of the carcass band by way of example.
Fig. 9 is a view showing a process of wrapping the reformed portion around the bead ring.

### DESCRIPTION OF THE SYMBOLS

- 1, 21: rigid core
- 2, 22: rotational driving shaft
- 3: anvil ring
- 4: annular groove
- 5, 28: carcass band
- 5a: steel cord
- 6: projecting end portion
- 6a: reformed portion
- 7: rotation disk
- 8: supporting shaft
- 9, 29: bead ring
- 10, 24: bead-locking means
- 11: wrapping means
- 23: positioning ring
- 25: carcass band wrapping means
- 26: unit carcass ply member
- 27: clamper
- 27a: male die member
- 27b: female die member
- 28: reformed portion

### BEST MODE FOR CURRYING OUT THE INVENTION

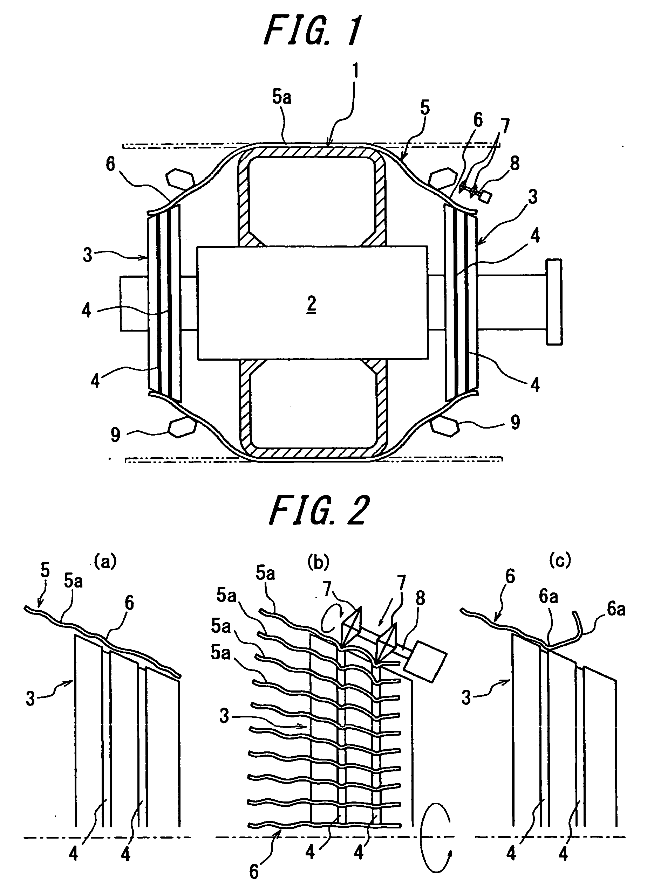

Figs. 1-4 show an embodiment of the present invention. A device of turning a carcass band according to the present invention, as shown in Fig. 1 as a partial sectional view in the radial direction, comprises: a rigid core 1 which has an outer contour corresponding to an inner contour of a product tire, is capable of assembling and disassembling and mounted to a rotational driving shaft 2; an anvil ring 3 which is arranged adjacent to the side portions of the rigid core, has a tapered circumference having a diameter progressive decreasing with distance from the rigid core, has a generally corn shape and a smaller diameter than that of the core 1, and mounted on the rotational driving shaft 2 concentrically with core 1; one or more annular (two annular grooves 14 in the figure) at a given place in the axial direction on the circumference of the anvil ring 3; and a rotation disk 7 for locally pressing end portions 5 of the carcass band 6, which will be discussed later in detail, into the annular groove 4 of the anvil rings 3, the rotation disk being able to approach to and recede from the anvil ring.

The sectional shape, size and the like of the annular groove 4 may be selected as needed. The rotation disk 7 may be mounted on the supporting shaft 8 and rotated by a friction force from the carcass band, or alternatively may be rotationally driven at the velocity identical with the circumferential velocity of the end portion of the carcass band 5.

The supporting shaft 8 preferably extends in parallel to the circumference of the anvil ring 3 in the radial cross section, and more preferably can approach to and recede from the anvil ring 3 while maintaining its posture. The support shaft 8 is further preferably a common supporting shaft as shown in the figures on which multiple rotation disk 7 can be mounted.

Meanwhile, the anvil ring 3 is preferably provided with a restraining means (not shown) capable of positioning and holding the end portion 6 of the carcass band 5 on the circumference by means of magnetic adsorption, vacuum adsorption, adhesion or the like.

In a process of producing a green tire by means of the device of turning a carcass band configured in this way, required tire component members are disposed on the circumference of the rigid core 1 in a given order to build a green tire. In this operation, firstly multiple carcass ply members, which is composed of a steel cord 5a typically coated with a rubber and one or more of which are used as a unit, are arranged on the rigid core 1 over its entire circumference and projected sufficiently beyond the side portions of the rigid core 1. One or more pairs (one pair in the figure) of bead rings 9 having a given diameter are disposed on and engaged with the both end portions of the rigid core 1 around the carcass band 5 disposed in a generally cylindrical shape as shown by imaginary lines in the figure. The portions of the carcass band 5 projecting from the rigid core 1 are gradually contracted toward the projecting end portion side in the radial direction as shown by solid lines in the figures. The projecting end portions projecting from the bead rings 9, i.e., the above-mentioned portions 6 are placed on the tapered circumference of the anvil ring 3. Preferably, the projecting end portions 6 are positioned and held on the tapered circumference by means of adsorption by the restraining means (not shown).

Thereafter, as shown in Fig. 2 of an enlarged view of a main part of one of the anvil rings, the rotation disks 7 are displaced to approach to the projecting end portion 6 which is positioned on the tapered circumference of the anvil ring 3 as shown in Fig. 2(a), so that the rotation disks 7 press the projecting end portion 6 at two positions, which are spaced in the axial direction with a given distance in the figure while rotating the rigid core 1, anvil ring 3 and consequently the carcass band 5, simultaneously into the annular grooves 4. As a result, as shown in Fig. 2(c), reformed portions 6a which are deformed in a direction turning in radially outward in a plastic manner are formed simultaneously over the entire circumference.

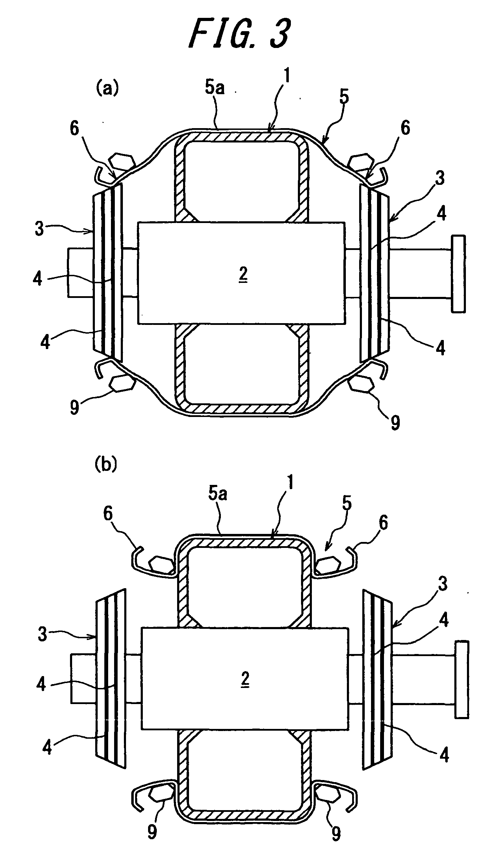

Fig. 3(a) is a partial sectional view similar to Fig. 1 showing a state of forming the reformed portion 6a. After the state shown by this figure, the pair of bead rings 9 are displaced to their original setting positions adjacent to the respective side portions of the rigid core as shown in Fig. 3(b).

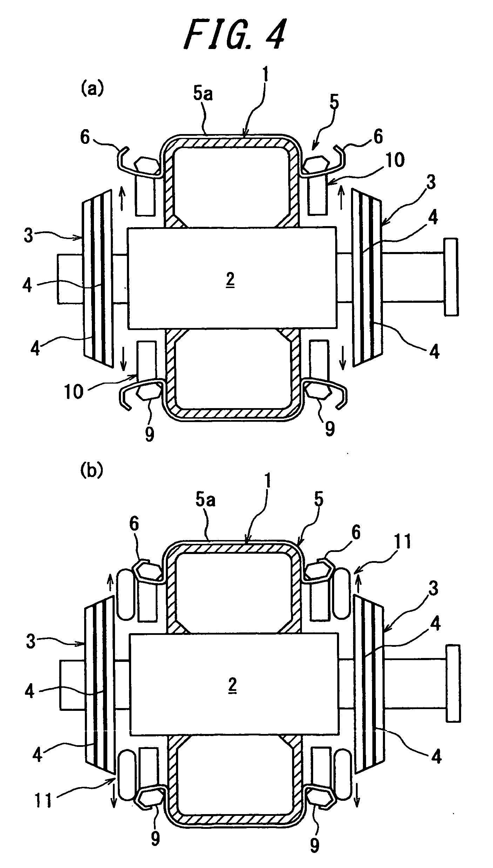

Further, as shown in Fig. 4(a), the bead-locking means 10 are radially expanded to position and hold the projecting end portions 6 of the carcass band 5 and bead rings 9 with the projecting end portions and the bead rings being slightly expanded in the radial direction. Then, the positioning and holding state is maintained and, as shown in Fig. 4(b), wrapping means 11 positioned adjacent to the bead-locking means 10 and outside of the rigid core 1 are radially expanded to deform the projecting end portions 6 and consequently the reformed portion radially outward in a plastic manner. Thereby, in associate with the projecting portions 6, the projection portions are deformed around the bead rings 9 from the outer side in the axial direction to a direction that the carcass band carries and holds the bead ring. In this case, the reformed potions 6a are preferably placed to correspond to one or more angle portions of the bead rings 9 having a polygonal cross section.

After the required wrapping of the projecting end portions 6 of the carcass band 5 around the bead rings 9 are completed in this way, the wrapping means 11 are radially contracted and, under this state, other tire component members are disposed onto the outer surface side of one or more layers of the carcass band 5 in a given order to built a green tire.

One embodiment of the present invention has been discussed with reference to the drawings, but the present invention is not limited to this embodiment. For example, there may be provided one or three or more annular grooves 4 on the circumference of the anvil ring as needed. The circumference of the anvil ring having a smaller diameter than that of the rigid core 1 may be a cylindrical surface having a uniform diameter over the entire length in the axial direction. The anvil ring may be displaced on the rotational driving shaft 2 to approach to and recede from the rigid core 1 under an action of spline or serration.

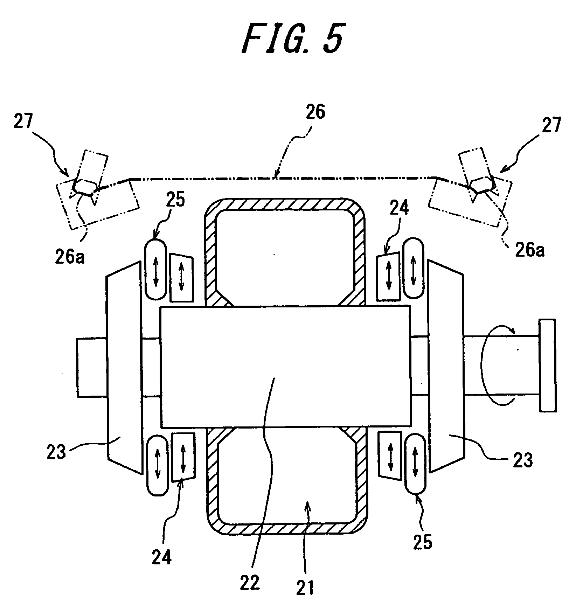

Fig. 5 is a partial sectional view of an embodiment of an apparatus-for producing a green tire which is useful for understanding the present invention, taken in the radial direction. In this embodiment, a rigid core 21 similar to the one mentioned in the above, which has an outer contour corresponding to an inner contour of a product tire and can be disassembled into and assembled from segments, is mounted and fixed on a rotational driving shaft 22. At the both side portions of the rigid core 21, positioning rings 23 which have tapered circumferences with their diameters progressively decreasing, in this figure, with distance from the core 21, and which have a generally truncated cone shape and a smaller diameter than that of the core 21 are arranged and fixed on the rotational driving shaft 22 to be concentric with the core 21.

Meanwhile, the positioning ring 23 is preferably provided with a carcass band-restraining means (not shown) for positioning and holding the end portion of the carcass band by means of magnetic adsorption, vacuum adsorption, adhesion or the like.

Between the positioning rings 23 and the rigid cores 21, there are provided bead-locking means 24 which are radially expanded to position and hold the bead rings together with the carcass band and radially contracted to release the bead ring. Between the bead-locking means 24 and the positioning rings 23, there are provided carcass band-wrapping means 24 which are radially expanded and contracted to function to deform the end portions of the carcass band projecting from the bead-locking means 24 radially outward in a plastic manner.

In this apparatus, for example, as shown by imaginary lines in the figure, there are provided a pair of clampers 27 clamping end portions 26a of a carcass ply members 26 which consist of a steel cord and have a given length, and one or more of which are used as a unit. The clampers 27 apply the carcass ply members 26 on the rigid core 21 preferably under an action to the tensile force, and reform the end portions 26a at the one or more positions, two positions in the figure, in a direction turning in radially outward of the rigid core 21 at required timings.

In a production of a green tire by means of the apparatus thus configured, one or more kinds of required tire component members are often preliminarily attached on the rigid core 21 and then while the bead-looking means 24 and the carcass band-wrapping means 25 are preliminarily displaced to radially contracted positions where the tire building operation is not interfered, the rigid core 21 and the positioning ring 23 are moved to a required index rotating positions. The unit carcass ply member 26 of which the both end portions 26a are clamped by the pair of clamper 27 are adhesively attached onto the circumference of the rigid core 21 in a required extending posture under an action of the tensile force thereto, and, by means of the clamper 27, the both end potions 26a of the carcass ply members 26 are subjected to reform at, for example, two positions in a direction turning radially outward of the rigid core 21 at a required timing.

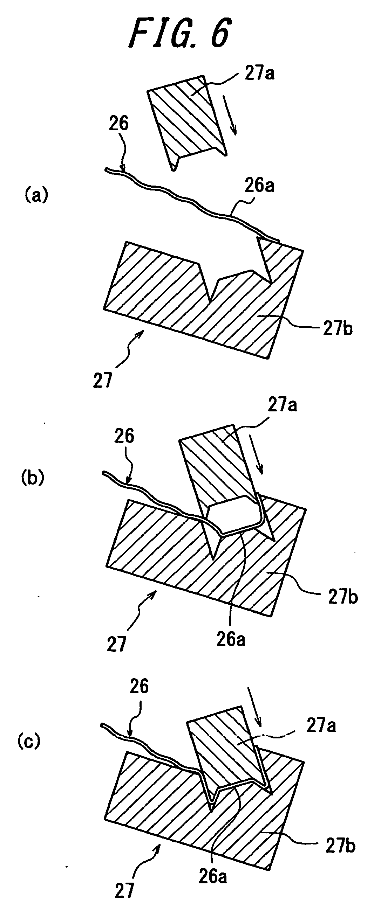

Fig. 6 is an enlarged sectional view showing a reform process at one of the end portions of the unit carcass ply 26. In this embodiment, a male die member 27a of the clamper 27 together with the end portion 26a of the ply member 26 are pressed into a female die member 27b, and the end portion 26a is bring into an embossed deformation in a plastic deformation region to correspond to the sectional contour of functional portions of the die members 27a, 27b, as shown in Fig. 6(c).

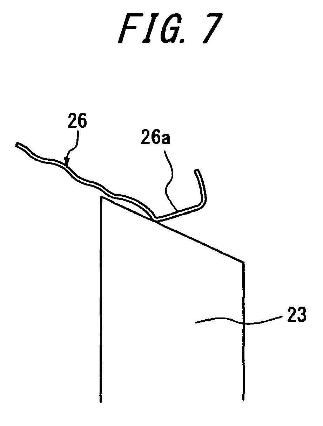

The end portions 26a of the carcass ply member 26 after the reform process are released from the clamper 27 and, as shown in Fig. 7, which is an enlarged view showing one of the end portions by way of example, are preferably laid on the circumference of the positioning ring 23 having a smaller diameter than that of the rigid core 21 due to the weights or the like of the end portions themselves. More preferably, the end portion is positioned and held on the circumference of the ring 23 by an appropriate carcass band-restraining means with adsorption, adhesion or the like.

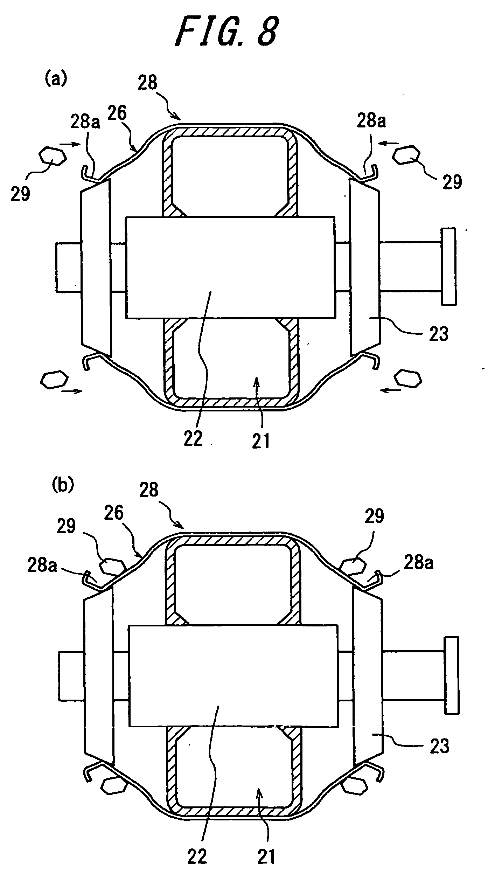

After the application of the unit carcass ply member 26 onto the rigid core 21, the reform process of the end potion 26a, and laying or positioning and holding of the reformed end portion of the ply member on the circumference of the ring are implemented over the entire circumference with an indexing operation of the rigid core 21 to form a carcass band having a single or multiple layer structure, one or more pairs of bead rings, a pair of bead rings 27 having a given diameter in the figure, held by an O-ring or the like via the reformed potion 28a of the carcass band 28 placed on the circumference of the positioning ring 23 with a smaller diameter are engaged at a position closer to the rigid core that the reformed portion 28 a without an interference with the reformed portion 28a to dispose the bead rings 29 on the both side portions of the rigid core 21 at positions on outer circumference side of the end portions of the carcass band, as shown in Fig. 8(b).

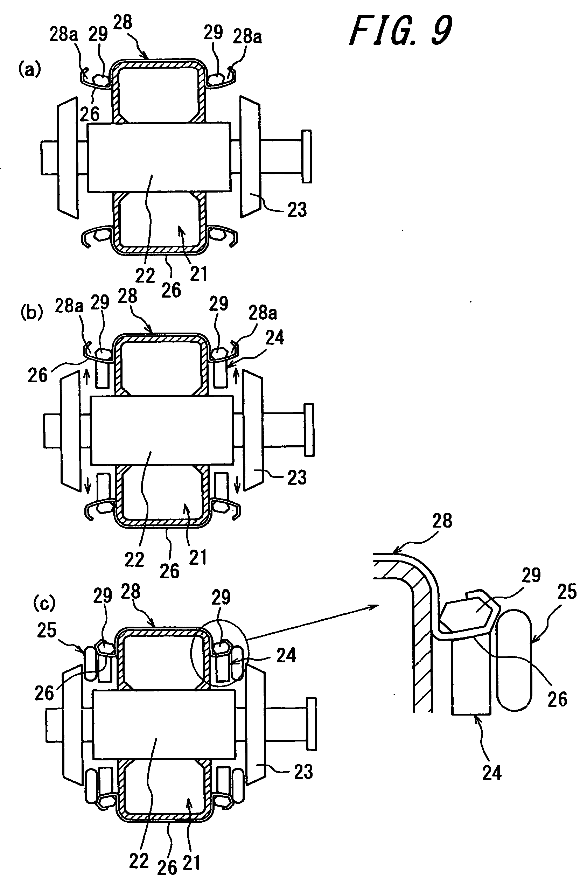

Thereafter, as shown in Fig. 9(a), the pair of bead rings 29 on the carcass band 28 are displaced to their given setting position adjacent to the respective side portions of the rigid core 21 with the carcass band 28 being deformed. Then, as shown in Fig. 9(b), the bead-locking means 24 together with the end portions of the carcass band 28 are radially expanded to position and hold with slight radial deformation thereof. Further, while maintaining the positioned and held state by the bead-locking means 24, the carcass band-wrapping means 25 adjacent to the outer side of the bead-locking means 24 are radially expanded as shown in Fig. 9(c) to deform, in plastic manner, the end portions inclusive of the reformed potions 28a of the carcass band 28 which project from the bead rings 29 outward in the axial direction. The reformed portions 28a, thus, are wrapped around the bead rings 29 from the outer side in the axial direction of the rigid core to a direction where the carcass band carries the bead rings.

In this case, the wrapping process is preferably carried out so as one or more of the reformed potions to be laid at places corresponding to respective angle portions of the bead rings 29 having a rectangular cross section. This can effectively increase the anchorage strength of the bead rings 29 with respect to the end portions of the carcass band 28.

After the operation of wrapping the end portions of the carcass band 28 around the bead rings 29 is completed in this way, the carcass band-wrapping means 25 are radially contracted. In this state, other required tire component members are arranged on the outer surface side of the carcass band in a given order to build a green tire on the rigid core 21.

In the above, the embodiments have been described with reference to the attached drawings, but, as mentioned above, it is possible that the circumference of the positioning ring 23 having a smaller diameter than that of the rigid core 23 is formed as a cylindrical surface having a uniform diameter over the entire length in the axial direction; and that the positioning ring 23 is displaced on the rotational driving shaft 22 to approach to and recede from the rigid core 21 as desired under an action of spline, serration of the like; and that the positioning ring 23 is engaged with/disengaged from the rotational driving shaft as needed.

## Claims

1. A method of producing a green tire built by providing required tire component members on a rigid core (1) which has an outer contour corresponding to an inner contour of a product tire, the method comprising:
arranging a plurality of unit carcass ply members which are composed of a steel cord (5a) on the rigid core over its entire circumference to form a carcass band (5);
arranging at least one pair of bead rings (9) at both side portions of the rigid core and at the outer circumference side of the carcass band;
reforming each end portion (6) of the carcass band projecting from the bead ring in a direction turning in radially outer side at one or more positions over the entire circumference of the carcass band; and
wrapping the reformed portion (6a) of the carcass band around the bead ring with being subjected to a plastic deformation, **characterised in that**
the reformation of the projection end portion of the carcass band is carried out by pressing locally the projection end portion into one or more annular grooves (4) on a circumference face of an anvil ring (3) which is arranged on the side portions of the rigid core to be rotationally driven.

2. The method of producing a green tire according to claim 1, wherein each of the projecting end portions of the carcass band is reformed at a position radially inside of the bead ring.

3. The method of producing a green tire according to according to claim 1 or 2, wherein the projection end portion is reformed on the anvil ring having a smaller diameter than that of the rigid core.

4. The method of producing a green tire according to claim 3, wherein the reformation is carried out on the anvil ring formed in a truncated cone shape with a diameter gradually decreasing toward the outside in the axial direction with respect to the rigid core.

5. The method of producing a green tire according to any one of the preceding claims, wherein the reformation is earned out on the anvil ring rotationally driven at the same velocity as that of the rigid core.

6. The method of producing a green tire according to any one of the preceding claims, wherein the reformation of the carcass band is carried out by pressing the carcass band into the annular groove of the anvil ring with a rotation disk.

7. The method of producing a green tire according to any one of the preceding claims, wherein a plurality of rotating disks (7) are simultaneously act upon a plurality of annular grooves of the anvil ring to simultaneously reform the carcass band at plural points.

8. A device for turning a carcass band (5) used for producing a green tire, comprises: an anvil ring (3) on which one or more annular grooves (4) are provided, which anvil ring is arranged adjacent to side portions of a rigid core (1) having an outer contour corresponding to an inner contour of a product tire, and which has a smaller diameter than that of the rigid core fixed on a rotational driving shaft (2) of the rigid core; and a rotation disk (7) which presses locally the end portions (6) of the carcass band into the annular grooves of the anvil ring and is arranged to be able to approach to and recede from the anvil ring.

9. The device for turning a carcass band used for a green tire according to claim 8, wherein the rotation disk is mounted on a supporting shaft (8) extending in parallel to the circumference of the anvil ring.

10. The device for turning a carcass band used for a green tire according to claim 8 or 9, wherein the anvil ring is provided with a means for restraining the carcass band.

11. The device for turning a carcass band used for a green tire according to any one of claims 8-10, wherein the circumference of the anvil ring is formed as a tapered face having a diameter progressively decreasing with distance from the rigid core.

12. The device for turning a carcass band used for a green tire according to any one of claims 8-11, wherein each of the rotation disks for pressing the carcass band into respective one of the plural annular grooves of the anvil ring is mounted on a common supporting shaft.

## Patentansprüche

1. Verfahren zum Herstellen eines Reifenrohlings, der aufgebaut wird durch das Bereitstellen von erforderlichen Reifenbestandteil-Elementen auf einem starren Kern (1), der einen äußeren Umriss hat, der einem inneren Umriss eines fertigen Reifens entspricht, wobei das Verfahren Folgendes umfasst:
das Anordnen von mehreren Karkassenlagen-Einheitselementen, die aus einem Stahlkord (5a) bestehen, auf dem starren Kern über dessen gesamtem Umfang, um ein Karkassenband (5) zu formen,
das Anordnen wenigstens eines Paares von Wulstringen (9) auf beiden Seiten des starren Kerns und an der Außenumfangsseite des Karkassenbandes,
das Umformen jedes Endabschnitts (6) des Karkassenbandes, der von dem Wulstring aus vorspringt, in einer Richtung, welche die in Radialrichtung äußere Seite nach innen wendet, an einer oder mehreren Positionen über den gesamten Umfang des Karkassenbandes, und
das Wickeln des umgeformten Abschnitts (6a) des Karkassenbandes um den Wulstring, wobei er einer plastischen Verformung unterworfen wird, **dadurch gekennzeichnet, dass**
die Umformung des vorspringenden Endabschnitts des Karkassenbandes ausgeführt wird durch das örtliche Pressen des vorspringenden Endabschnitts in eine oder mehrere ringförmige Rillen (4) auf einer Umfangsfläche eines Ambossrings (3), der auf den Seitenabschnitten des starren Kerns angeordnet ist, um drehend angetrieben zu werden.

2. Verfahren zum Herstellen eines Reifenrohlings nach Anspruch 1, wobei jeder der vorspringenden Endabschnitte des Karkassenbandes an einer Position, von dem Wulstring aus in Radialrichtung nach innen, umgeformt wird.

3. Verfahren zum Herstellen eines Reifenrohlings nach Anspruch 1 oder 2, wobei der vorspringende Endabschnitt auf dem Ambossring umgeformt wird, der einen Durchmesser hat, der kleiner ist als derjenige des starren Kerns.

4. Verfahren zum Herstellen eines Reifenrohlings nach Anspruch 3, wobei die Umformung auf dem Ambossring ausgeführt wird, der in einer kegelstumpfförmigen Gestalt geformt ist, mit einem Durchmesser, der in der axialen Richtung zur Außenseite hin in Bezug auf den starren Kern allmählich abnimmt.

5. Verfahren zum Herstellen eines Reifenrohlings nach einem der vorhergehenden Ansprüche, wobei die Umformung auf dem Ambossring ausgeführt wird, der mit der gleichen Geschwindigkeit wie diejenige des starren Kerns drehend angetrieben wird.

6. Verfahren zum Herstellen eines Reifenrohlings nach einem der vorhergehenden Ansprüche, wobei die Umformung des Karkassenbandes ausgeführt wird durch das Pressen des Karkassenbandes in die ringförmige Rille des Ambossrings mit einer Drehscheibe.

7. Verfahren zum Herstellen eines Reifenrohlings nach einem der vorhergehenden Ansprüche, wobei mehrere Drehscheiben (7) gleichzeitig auf mehrere ringförmige Rillen des Ambossrings einwirken, um das Karkassenband gleichzeitig an vielen Punkten umzuformen.

8. Vorrichtung zum Wenden eines Karkassenbandes (5), das zum Herstellen eines Reifenrohlings verwendet wird, die Folgendes umfasst: einen Ambossring (3), an dem eine oder mehrere ringförmige Rillen (4) bereitgestellt werden, wobei der Ambossring angrenzend an Seitenabschnitte eines starren Kerns (1), der einen äußeren Umriss hat, der einem inneren Umriss eines fertigen Reifens entspricht, angeordnet ist und einen Durchmesser hat, der kleiner ist als derjenige des starren Kerns, befestigt auf einer Drehantriebswelle (2) des starren Kerns, und eine Drehscheibe (7), welche die Endabschnitte (6) des Karkassenbandes örtlich in die ringförmigen Rillen des Ambossrings presst und so angeordnet ist, dass sie dazu in der Lage ist, sich an den Ambossring anzunähern und sich von demselben zurückzuziehen.

9. Vorrichtung zum Wenden eines Karkassenbandes, das für einen Reifenrohling verwendet wird, nach Anspruch 8, wobei die Drehscheibe auf einer Stützwelle (8) angebracht ist, die sich parallel zu dem Umfang des Ambossrings erstreckt.

10. Vorrichtung zum Wenden eines Karkassenbandes, das für einen Reifenrohling verwendet wird, nach Anspruch 8 oder 9, wobei der Ambossring mit einem Mittel zum Festhalten des Karkassenbandes versehen ist.

11. Vorrichtung zum Wenden eines Karkassenbandes, das für einen Reifenrohling verwendet wird, nach einem der Ansprüche 8 bis 10, wobei der Umfang des Ambossrings als eine verjüngte Fläche geformt ist, die einen Durchmesser hat, der mit der Entfernung von dem starren Kern fortschreitend abnimmt.

12. Vorrichtung zum Wenden eines Karkassenbandes, das für einen Reifenrohling verwendet wird, nach einem der Ansprüche 8 bis 11, wobei jede der Drehscheiben zum Pressen des Karkassenbandes in eine jeweilige der mehreren ringförmigen Rillen des Ambossrings auf einer gemeinsamen Stützwelle angebracht ist.

## Revendications

1. Procédé de production d'un bandage pneumatique vert en fournissant des éléments de composants de bandage pneumatique requis sur un noyau rigide (1) comportant un contour externe correspondant à un contour interne d'un bandage pneumatique produit, le procédé comprenant les étapes ci-dessous:
agencement de plusieurs éléments de nappe de carcasse unitaires composés d'un câblé d'acier (5a) sur le noyau rigide, sur l'ensemble de sa circonférence, pour former une bande de carcasse (5);
agencement d'au moins une paire d'anneaux de talon (9) au niveau des deux parties latérales du noyau rigide et au niveau du côté circonférentiel externe de la bande de carcasse;
reformage de chaque partie d'extrémité (6) de la bande de carcasse débordant de l'anneau de talon dans une direction tournant vers l'intérieur le côté radialement externe au niveau d'une ou de plusieurs positions sur la circonférence complète de la bande de carcasse; et
enroulement de la partie reformée (6a) de la bande de carcasse autour de l'anneau de talon, avec une exposition à une déformation plastique, **caractérisé en ce que**
le reformage de la partie d'extrémité en saillie de la bande de carcasse est effectué en pressant localement la partie d'extrémité en saillie dans une ou plusieurs rainures annulaires (4) sur une face circonférentielle d'un anneau d'enclume (3) agencé sur les parties latérales du noyau rigide en vue d'un entraînement en rotation.

2. Procédé de production d'un bandage pneumatique vert selon la revendication 1, dans lequel chacune des parties d'extrémité en saillie de la bande de carcasse est reformée au niveau d'une position située radialement vers l'intérieur de l'anneau de talon.

3. Procédé de production d'un bandage pneumatique vert selon la revendication 1 ou 2, dans lequel la partie d'extrémité en saillie est reformée sur l'anneau d'enclume ayant un diamètre inférieur à celui du noyau rigide.

4. Procédé de production d'un bandage pneumatique vert selon la revendication 3, dans lequel le reformage est effectué sur l'anneau d'enclume ayant la forme d'un tronc de cône, avec un diamètre se réduisant progressivement vers l'extérieur dans la direction axiale par rapport au noyau rigide.

5. Procédé de production d'un bandage pneumatique vert selon l'une quelconque des revendications précédentes, dans lequel le reformage est effectué sur l'anneau d'enclume entraîné en rotation à la même vitesse que le noyau rigide.

6. Procédé de production d'un bandage pneumatique vert selon l'une quelconque des revendications précédentes, dans lequel le reformage de la bande de carcasse est effectué en pressant la bande de carcasse dans la rainure annulaire de l'anneau d'enclume avec un disque de rotation.

7. Procédé de production d'un bandage pneumatique vert selon l'une quelconque des revendications précédentes, dans lequel plusieurs disques de rotation (7) agissent simultanément sur plusieurs rainures annulaires de l'anneau d'enclume pour reformer simultanément la bande de carcasse au niveau de plusieurs points.

8. Dispositif destiné à tourner une bande de carcasse (5) utilisée pour produire un bandage pneumatique vert, comprenant : un anneau d'enclume (3) comportant une ou plusieurs rainures annulaires (4), ledit anneau d'enclume étant agencé près des parties latérales d'un noyau rigide (1), comportant un contour externe correspondant à un contour interne d'un bandage pneumatique produit, et ayant un diamètre inférieur à celui du noyau rigide fixé sur un arbre d'entraînement rotatif (2) du noyau rigide ; et un disque de rotation (7), pressant localement les parties d'extrémité (6) de la bande de carcasse dans les rainures annulaires de l'anneau d'enclume, et agencé de sorte à pouvoir se rapprocher et s'éloigner de l'anneau d'enclume.

9. Dispositif destiné à tourner une bande de carcasse utilisée pour un bandage pneumatique vert selon la revendication 8, dans lequel le disque de rotation est monté sur un arbre de support (8), s'étendant de manière parallèle à la circonférence de l'anneau d'enclume.

10. Dispositif destiné à tourner une bande de carcasse utilisée pour un bandage pneumatique vert selon la revendication 8 ou 9, dans lequel l'anneau d'enclume comporte un moyen pour retenir la bande de carcasse.

11. Dispositif pour tourner une bande de carcasse utilisée pour un bandage pneumatique vert selon l'une quelconque des revendications 8 à 10, dans lequel la circonférence de l'anneau d'enclume a la forme d'une face effilée ayant un diamètre se réduisant progressivement en fonction de la distance par rapport au noyau rigide.

12. Dispositif pour tourner une bande de carcasse utilisée pour un bandage pneumatique vert selon l'une quelconque des revendications 8 à 11, dans lequel chacun des disques de rotation destinés à presser la bande de carcasse dans une rainure respective des plusieurs rainures annulaires de l'anneau d'enclume est monté sur un arbre de support commun.
